Europäisches Patentamt

European Patent Office

Office européen des brevets

(19)

(11) Veröffentlichungsnummer: **0 331 683 B1**

(12) # EUROPÄISCHE PATENTSCHRIFT

(45) Veröffentlichungstag der Patentschrift:
**19.06.91 Patentblatt 91/25**

(51) Int. Cl.⁵: **F04B 21/08, F16J 15/40**

(21) Anmeldenummer: **88900692.0**

(22) Anmeldetag: **16.12.87**

(86) Internationale Anmeldenummer:
**PCT/EP87/00786**

(87) Internationale Veröffentlichungsnummer:
**WO 88/04731 30.06.88 Gazette 88/14**

(54) **HÖCHSTDRUCK-KOLBEN PUMPE.**

(30) Priorität: **23.12.86 CH 5205/86**

(43) Veröffentlichungstag der Anmeldung:
**13.09.89 Patentblatt 89/37**

(45) Bekanntmachung des Hinweises auf die
Patenterteilung:
**19.06.91 Patentblatt 91/25**

(84) Benannte Vertragsstaaten:
**AT BE CH DE FR GB IT LI LU NL SE**

(56) Entgegenhaltungen:
**BE-A- 629 082**
**CH-A- 640 323**
**DE-A- 3 202 236**
**FR-A- 2 246 205**

(73) Patentinhaber: **ZBINDEN'S HYDROJET**
**TECHNOLOGY AG**
**Bankgasse 2 Postfach 26**
**CH-9050 Appenzell (CH)**

(72) Erfinder: **Behnisch, Gotthard, Dr.**
**Twellenkampweg 12**
**W-4937 Lage-Heiden (DE)**
Erfinder: **Zbinden, Fritz, Dr.**
**Schönenbüel 35**
**CH-9050 Steinegg (CH)**

(74) Vertreter: **Feldmann, Clarence Paul**
**c/o Patentanwaltsbüro FELDMANN AG**
**Postfach Kanalstrasse 17**
**CH-8152 Glattbrugg (CH)**

**Beschreibung**

Die vorliegende Erfindung beinhaltet eine Höchstdruck-Kolbenpumpe, mit welcher Wasser und unter Zusatz von entsprechenden Trenneinrichtung auch andere Medien bis in den Druckbereich von 22 kbar verdichtet werden können Solche Höchstdruck-Kolbenpumpen werden heute vor allem für das Wasserstrahl-Schneiden, das sogenannte Jet-Cutting, verwendet. Jet-Cutting ist eine sehr vielseitige und in Verbreitung begriffene Schneidmethode, sowohl für sehr weiche als auch für sehr harte Materialien Zum Beispiel werden Textilien, Wellpappen, Kunststoffe, Faserverbundwerkstoffe und weitere relativ weiche Werkstoffe mit Jet-Cutting geschnitten, weil mit dieser Methode besonders saubere Schnittkanten von grossen Materialstapeln erreicht werden können. Ein weiterer entscheidender Vorteil dieser Schneidmethode besteht darin, dass bloss eine Düse örtlich geführt und gesteuert werden muss und keine teure Stanz- und Schneidwerkzeuge mehr nötig sind. Schnittformänderungen bedingen bloss noch eine Aenderung des Steuerprogrammes. Mit Jet-Cutting ist auch das Schneiden von dreidimensionalen Formen kein Problem.

Die heute verwendeten Höchstdruck-Kolbenpumpen für Jet-Cutting verdichten das Fördermittel, zum Beispiel Wasser, bis zu einem Druck von etwa 3000 bis 5000 bar. Sie müssen alle 300 bis 500 Betriebsstunden zerlegt werden, um die Kolbendichtungen, welche starkem Verschleiss unterworfen sind, auszuwechseln. Bisher wurden Förderdrucke von bis zu maximal 12 kbar erreicht. Bei solchermassen beanspruchten Höchstdruck-Kolbenpumpen betragen die Standzeiten der Höchstdruck-Dichtungen sogar nur etwa 20 Minuten. Diese Sachverhalte bestimmen weitgehend den heutigen Stand des Jet-Cuttings. Wegen der mit zunehmendem Förderdruck abnehmenden Standzeit der Höchstdruck-Dichtungen werden die heute in der Industrie eingesetzten Jet-Cutting-Anlagen nur bis zu einem Druck von maximal 5 kbar betrieben. Die bei diesem Betrieb immer noch sehr kurzen Intervalle von ca. 300 Stunden zwischen zwei Revisionen der Höchstdruck-Dichtungen sind eine grosser Nachteil dieser Schneidtechnologie. Deshalb werden oft Jet-Cutting-Anlagen mit zwei Höchstdruck-Kolbenpumpen ausgerüstet, welche abwechslungsweise betrieben und revidiert werden. Die Begrenzung des Förderdruckes heutiger Jet-Cutting-Anlagen auf ca. 5 kbar begrenzen deren Einsatzmöglichkeiten einschneidend. So ist es zum Beispiel nicht möglich, damit Bleche oder auch Gestein wirkungsvoll und sauber zu schneiden. Bei Blechschneiden wäre der Einsatz von Jet-Cutting sehr wünschenswert, da dabei die Randzonen nicht wärmebeeinflusst würden, wie dies zum Beispiel beim Laser-Schneiden der Fall ist. Auch der Gesteinsbohrtechnik würden durch den Einsatz des Jet-Cuttings bei Drucken im Bereich von 10 kbar und darüber ganz neue Möglichkeiten eröffnet.

Ausser beim Jet-Cutting können solche Höchstdruck-Kolbenpumpen in verschiedenen anderen Bereichen eingesetzt werden. So zum Beispiel in der physikalischen Chemie zur Bestimmung von Stoffeigenschaften, als Katalysatorpumpen, als Pumpen zur Autofrettage von Rohren und für andere Einsatzmöglichkeiten.

Im wesentlichen Unterschied gegenüber den herkömmlichen Höchstdruck-Kolbenpumpen wird der Förderkolben der vorliegenden Höchstdruck-Kolbenpumpe mittels Eis gegenüber der Umgebung abgedichtet. Dieses Eis wird aus dem im Kompressionsraum vorhandnen Wasser durch Abkühlung- des Kolbens oder der ihn umgebenden Hülse gebildet. Ist das Fördermittel nicht Wasser, sondern ein anderes Medium, so ist ein Trennelement zwischen Kompressionsraum und Dichtung erforderlich.

Eisdichtungen sind grundsätzlich bekannt und in den folgenden fünf Patentschriften beschrieben :

FR-A-2'077'144
FR-A-2'038'458
US-A-3'333'907
DE-B-1'229'801
US-A-3'612'713

Mit all diesen Vorrichtungen können jedoch nur Drucke von höchstens einigen wenigen hundert bar abgedichtet werden. In der PCH-A- 640'323 wird eine Eidsdichtung für Drucke über 1000 bar beschrieben. Aus physikalischen Gründen ist es jedoch nicht möglich, damit einen höheren Druck als 2080 bar abzudichten. Bei diesem Druck findet im Eis ein Phasenübergang statt : Es geht Eis I mit einem hexagonalen Gitter in Eis III mit einem tetragonalen Gitter über, und dabei nimmt die Dichte des Eises um 18% zu. Das heisst, der Spalt zwischen dem Kolben und der gekühlten Hülse wird um ca. 18% vergrössert. Durch die elastische Aufweitung der Hülse infolge Zunahme des Druckes im Förderraum wird dieser Spalt ebenfalls vergrössert. Diese beiden Anteile der Spaltaufweitung können auch mit sehr starker Kühlung alleine nicht schnell genug kompensiert werden und die Dichtung bricht durch. Weiter sind die in dieser Eisdichtung auftretenden Reibkräfte in einem relativ grossen Bereich von Druck- und Kolbenstellung sehr hoch und verunmöglichen deshalb einen wirtschaftlichen Einsatz derselben, wie aus der ETH-Dissertation Nr. 8015 hervorgeht.

Die vorliegende Erfindung stellt sich zur Aufgabe, die Einzsatzmöglichkeiten des Jet-Cuttings wesentlich zu verbreitern, indem sie eine Höchstdruck-Kolbenpumpe mit Eisdichtung schafft, die das Fördermittel auf höhere als bisher übliche Drucke verdichtet, eine wesentlich höhere Standzeit der Höschstdruck-Dichtung im Vergleich zu denjenigen in den heute bekannten Maschinen gewährleistet und keine Leckage der Höchstdruck-Dichtung mehr aufweist.

Diese Aufgabe wird gelöst von einer Höchstdruck-Kolbenpumpe nach dem Oberbegriff des Patentanspruches 1, die sich dadurch auszeichnet, dass der Innendurchmesser der Hülse mittels eines in dieser oder um diese angreifenden Druckmediums variierbar ist oder dass der Aussendurchmesser des Kolbens mittels eines im Innern des Kolbens angreifenden Druckmediums variierbar ist und dass der Kolben zur Reduzierung der translatorischen Reibkräfte rotierbar ist.

Eine beispielsweise Ausführung der erfindungsgemässen Höchstdruck-Kolbenpumpe wird nachfolgend anhand der Zeichnung erläutert. Es zeigt :

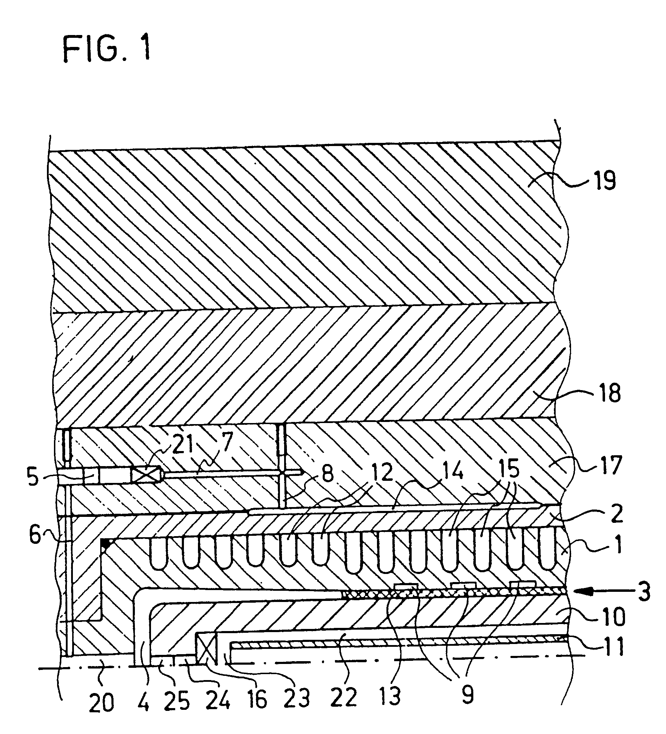

Figur 1 einen Hauptschnitt durch den Höchstdruck-Teil einer Höchstdruck-Kolbenpumpe.

Das Eis 13 im Dichtungsbereich 3 wird von aussen mittels der Hülse 1 gekühlt und der Innendurchmesser der Hülse 1 wird variiert. Der Kolben 10, welcher prismatisch oder mit veränderlichem Querschnitt in seinem Dichtungsbereich ausgeführt sein kann, wird zum Beispiel hydraulisch oder mechanisch angetrieben. Die Rotation des Kolbens 1 wird vorteilhaft durch einen Elektromotor ausgeführt, welcher in die Antriebshydraulik integriert sein kann. Die Randzone des Kolbens 10 kann aus Werkstoffen mit unterschiedlichen Temperatur-Leitzahlen bestehen, um in Zonen hoher Reibkräfte momentan und lokal Wärme an das Eis 13 abzugeben und in Zonen zu grossen Wasserfilmes zwischen Eis 13 und Kolben 10 dem Eis 13 lokal und momentan Wärme zu entziehen. Der Kolben 10 ist im Dichtungsbereich 3 von Eis 13 und im Kompressionsraum 4 vom Fördermittel 20 umgeben. Im Innern des Kolbens 10 befindet sich das Rohr 11, welches das Kühl- beziehungsweise Heizmedium aus dem Kolben 10 wegführt. Um während dem Ansaughub die Reibkräfte und während dem Kompressionshub die Höhe des Wasserfilmes zu vermindern, kann die Temperatur des durch das Rohr 11 dem Kolben 10 zugeführten Mediums periodisch synchron mit der Kolbenbewegung variieren. Das Eis 13 im Dichtungsbereich 3 haftet an der Hülse 1. Es wird durch das in den schraubenförmigen Nuten 15 der Hülse 1 zirkulierende Kühlmedium gekühlt. Die radialen Einstiche 12 dienen zur Eindämmung des Wärmeflusses vom Kompressionsraum 4 in den Dichtungsbereich 3 und verhindern eine Eisbildung im Kompressionsraum 4. Aus dem gleichen Grunde werden die Ein- und Auslassventile vorteilhaft ausserhalb der Höchstdruck-Kolbenpumpe angeordnet. Die Ausnehmungen 9, welche mit einem kompressiblen Medium gefüllt sind, erlauben einen stufenweisen Abbau des Druckes in der Eisdichtung. Diese Massnahme vermindert die notwendige Dichtungslänge beim Abdichten hoher Drucke. Auf die Hülse 1 ist die Hülse 2 aufgeschrumpft, welche im Zwischenraum 14 durch das Druckmedium mit Druck beaufschlagbar ist. Die Wandstärke dieser Hülse 2 wird im Bereich der Dichtungslänge 3 so dünn und mit minimaler Steifigkeit und Wärmeleitfähigkeit gestaltet wie möglich, um eine optimale Druckkompensation der Hülse 1 und ein geringer Wärmefluss von Hülse 17 nach Hülse 1 zu erreichen. Die Hülse 2 ist zum Beispiel mittels Elektronenstrahl-Schweissung äusserhalb des Dichtungsbereiches mit der aufgeschrumpften Hülse 17 verbunden. Die Hülse 17 ist in diesem Beispiel mit den Bohrungen 6, 7 und 8 zur Variation des Innendurchmessers der Hülse 1 versehen. Ein Sperrelement 5, welches in diesem Bei.spiel als Pfropfen 5 ausgebildet ist, verhindert, dass das Fördermittel 20 in den Zwischenraum 14 eindringen kann. Dieses Sperrelement kann auch aus einer Membrane oder einem Syphon bestehen, welches mit einer Flüssigkeit gefüllt ist, die spezifisch schwerer als das Fördermittel und das Druckmedium ist. Ein Steuerelement 21 steuert in Abhängigkeit des Druckes des Fördermittels 20 im Kompressionsraum 4 und weiterer Parameter die Variation des Innendurchmessers der Hülse 1 im Dichtungsbereich 3. Die Zylinder 18 und 19 sind autofrettiert und dienen zur Aufnahme des hohen Innendruckes. Die Kühlung der Hülse 1, das Heizen und Kühlen des Kolbens 10 und die Variation des Druckes des Druckmediums werden in Abhängigkeit von der Förderleistung und den Betriebsparametern von einem Mikroprozessor gesteuert.

Es ist auch die konstruktive Ausführung möglich, bei der die Druckkompensation durch die Variation des Kolbendurchmessers erfolgt, indem der Kolben 10 das dichtende Sperrelement 25 enthält und über Bohrung 24 und das Steuerelement 16 den Druck des Druckmediums im Hohlraum 23 variiert. Ebenso ist eine konstruktive Ausführung möglich, bei der die Hauptkühlung durch das im Kolben 10 strömende Kühlmedium erfolgt und bei der die Druckkompensation wiederum durch das Druckmedium im Zwischenraum 14 erfolgt.

Mit dieser Höchstdruck-Kolbenpumpe lässt sich nun das Anwendungsgebiet des Jet-Cutting wesentlich ausdehnen. Die Standzeiten der Höchstdruck-Dichtung der vorliegenden Höchstdruck-Kolbenpumpe betragen mehrere tausend Stunden. Dadurch wird die Wirtschaftlichkeit des Jet-Cuttings wesentlich verbessert und es können erstmals auf diese Weise Materialien geschnitten werden, die bis heute auf andere Art bearbeitet werden. In der Gesteinsbohrtechnik erlaubt diese Höchstdruck-Kolbenpumpe zum Beispiel das Entstehen einer neuen Generation von Abbau-, Stollenvortriebs- und Tunnelbohrsystemen.

**Ansprüche**

1. Höchstdruck-Kolbenpumpe, bestehend aus einem Kolben (10), der in einer Hülse (1) mittels einer Eisschicht zwischen Kolben (10) und Hülse (1) dichtend geführt ist, indem der Kolben (10) oder die Hülse (1) oder beide kühlbar sind, dadurch gekennzeichnet, dass der Innendurchmesser der Hülse (1) mittels eines in dieser oder um diese angreifenden Druckmediums variierbar ist, oder dass der Aussendurchmesser des Kolbens (10) mittels eines im Inneren des Kolbens (10) angreifenden Druckmediums variierbar ist, und dass der Kolben (10) zur Reduzierung der translatorischen Reibkräfte in der Hülse (1) rotierbar ist.

2. Höchstdruck-Kolbenpumpe nach Anspruch 1, dadurch gekennzeichnet, dass der Innendurchmesser der Hülse (1) mittels des Druckmediums variierbar ist, indem die Hülse (1) von zwei ineinandergesteckten, äusseren Hülsen (2, 17) umgeben ist, zwischen diesen Hülsen (2, 17) im Dichtungsbereich (3) der Hülse (1) ein Zwischenraum (14) vorhanden ist, welcher mit dem Druckmedium gefüllt ist, dass der Zwischenraum (14) über Bohrungen (6, 7, 8) mit dem Kompressionsraum (4) verbunden ist, wobei eine der Bohrungen (6, 7, 8) ein dichtendes Sperrmedium (5) enthält, welches das Eindringen des Fördermittels (20) in den Zwischenraum (14) verhindert, und dass die Variation des Innendurchmessers der Hülse (1) steuerbar ist, indem die Bohrungen (6, 7, 8) über ein Steuerelement (21) führen, welches den Druck des Druckmediums im Zwischenraum (14) in Abhängigkeit des Druckes des Fördermittels (20) im Kompressionsraum (4) und weiterer Parameter variiert.

3. Höchstdruck-Kolbenpumpe nach Anspruch 1, dadurch gekennzeichnet, dass der Aussendurchmesser des Kolbens (10) variierbar ist, indem in seinem Innern (22) ein Hohlraum (23) vorhanden ist, der mit dem Druckmedium gefüllt ist, und dass der Hohlraum (23) über eine Bohrung (24) mit dem Kompressionsraum (4) verbunden ist, wobei die Bohrung (24) ein dichtendes Sperrelement (25) enthält, welches das Eindringen des Fördermittels (20) in den Hohlraum (23) verhindert, und dass die Variation des Aussendurchmesser des Kolbens (10) steuerbar ist, indem die Bohrung (24) über ein Steuerelement (16) führt, welches den Druck des Druckmediums im Hohlraum (23) in Abhängigkeit des Druckes des Fördermittels (20) im Kompressionsraum (4) und weiterern Parameter variiert.

4. Höchstdruck-Kolbenpumpe nach Anspruch 1, dadurch gekennzeichnet, dass die Rotation des Kolbens (10) mittels eines Elektromotors erfolgt, der über einen Mikroprozessor steuerbar ist, wobei der Hauptparameter der Steuerung der Gradient der gemessenen translatorischen Reibkraft des Kolbens (10) ist.

5. Höchstdruck-Kolbenpumpe nach Anspruch 1, dadurch gekennzeichnet, dass die Dichtung mehrstufig ausgelegt ist, indem in der Innenwandung der kühlbaren Hülse (1) oder in der Aussenwandung des kühlbaren Kolbens (10) eine oder mehrere, in bestimmten Abständen angebrachte rotationssymmetrische Ausnehmungen (9) vorhanden sind, die mit kompressiblen Medien ausgefüllt sind.

6. Höchstdruck-Kolbenpumpe nach Anspruch 1, dadurch gekennzeichnet, dass die Randzone der Aussenwandung des Kolbens (10) oder die Randzone der Innenwandung der Hülse (1) abschnittweise aus Werkstoffen mit unterschiedlichen Temperaturleitzahlen besteht.

7. Höchstdruck-Kolbenpumpe nach Anspruch 1, dadurch gekennzeichnet, dass der nicht zur Hauptkühlung beitragende Kolben (10) oder die nicht zur Hauptkühlung beitragende Hülse (1) unabhängig von der permanenten Kühlung des anliegenden Kolbens (10) beziehungsweise der anliegenden Hülse (1) kühl- und heizbar ist.

8. Höchstdruck-Kolbenpumpe nach Anspruch 1, dadurch gekennzeichnet, dass die Hülse (1) im Bereich des Kompressionsraumes (4) mit Nuten (12) oder anderen wärmedämmenden Einrichtungen versehen ist, um das Einfrieren des Fördermittels im Kompressionsraum (4) zu verhindern.

9. Höchstdruck-Kolbenpumpe nach Anspruch 2 und 3, dadurch gekennzeichnet, dass das Sperrelement aus einem Pfropfen, einer Membrane oder einem Siphon besteht, das mit einer Flüssigkeit gefüllt ist, die spezifisch schwerer als das Fördermittel und das Druckmedium ist.

10. Höchstdruck-Kolbenpumpe nach Anspruch 1, dadurch gekennzeichnet, dass die Kühlung des Kolbens (10) oder der Hülse (1), das Heizen und Kühlen des nicht zur Hauptkühlung beitragenden Kolbens (10) oder der nicht zur Hauptkühlung beitragenden Hüse (1), die Rotation des Kolbens (10) und die Variation des Druckes des Druckmediums in Abhängigkeit von den Betriebsparametern und der Förderleistung von einem Mikroprozessor steuerbar ist.

## Claims

1. A very high pressure pump comprising a piston (10) movable in a sealing manner in a casing (1) by help of an ice layer, for which the piston or the casing or both can be cooled, characterised in that the internal diameter of the casing (1) is variable by help of a pressure medium engaging in or around the casing or that the external diameter of the piston (10) is variable by help of a pressure medium engaging the interior of the piston and that the piston (10) is rotatable in the casing (1) in order to reduce translational frictional forces.

2. A very high pressure piston pump in accordance with claim 1, characterised in that the internal diameter of the casing (1) is variable by the pressure medium, and the casing (1) is surrounded by two external casings (2, 17), the external casings (2, 17) mesh with one another forming an intermediate space (14) between the external casings (2, 17) in a sealing area (3) of the casing (1), the intermediate space (14) is filled with the pressure medium ; the intermediate space (14) communicates with the compression space (4) through bores (6, 7, 8), one of the bores (6, 7, 8) contains a blocking element (5) which prevents penetration of the conveying agent (20) into the intermediate space (14) ; and the variable internal diameter of the casing (1) is controllable with a control element (21), the control element (21) is in communication with the bores (6, 7, 8), the control element (21) varies the intermediate space pressure of the pressure medium in the intermediate space (14) depening upon the conveying agent pressure of the conveying agent (20) in the compression space (4) and other parameters.

3. A very high pressure piston pump in accordance with claim 1, characterised in that the external diameter of the piston (10) is variable, and a hollow space (23) is located within an interior (22) of the piston (10), the hollow space (23) is filled with the pressure medium ; the hollow space (23) is in communication with the compression space (4) through a bore (24), the bore (24) contains a sealing blocking element (25) which prevents the penetration of the conveying agent (20) into the hollow space (23); and variation of the external diameter of the piston (10) is controllable with a control element (16), the control element (16) varies a hollow space pressure of the pressure medium in the hollow space (23) depending upon a conveying agent pressure of the conveying agent (20) in the compression space (4) and other parameters.

4. A very high pressure piston pump in accordance with claim 1, characterised in that the piston (10) is rotated with an electrical motor, the electrical motor is controllable by a microprocessor, and a primary parameter of control is a gradient of a measured translational frictional force of the piston (10).

5. A very high pressure piston pump in accordance with claim 1, characterised in that the sealing manner between the piston (10) and the casing (1) is arranged in several layers, for which in the internal wall of the casing (1) or in the external wall of the piston (10), one or more rotationally symmetrical recess (9) positioned at specific distances are filled with compressible media.

6. A very high pressure piston pump in accordance with claim 1, characterised in that at least the border zone of an external wall of the piston (10) or the border zone of an internal wall of casing (1) comprise materials having different thermal conductivities.

7. A very high pressure piston pump in accordance with claim 1, characterised in that at least one of the piston (10) and the casing (1) which does not contribute to primary cooling, can be cooled or heated independent of the permanent cooling of the adjacent piston (10) or the adjacent casing (1).

8. A very high pressure piston pump in accordance with claim characterised in that the casing (1) in an area of the compression space (4) has circular grooves (12) or other means to prevent a conveying agent (20) from freezing in the compression space (4).

9. A very high pressure piston pump in accordance with claim 2 and 3, characterised that the blocking element (25) consists of a stopper, a membrane, or a siphon filled with a fluid heavier than the conveying agent (20) and the pressure medium.

10. A very high pressure piston pump in accordance with claim 1, characterised in that the cooling of the piston (10) or the casing (1), whichever does not contribute to the main cooling the heating or cooling of the piston (10) or the casing (1) and the piston rotation the pressure variation of the pressure medium is controlled depending on operational parameters and of the conveying capacity by a micro-processor.

## Revendications

1. Pompe à piston à très haute pression, composée d'un piston (10) guidé étanche dans une chemise (1), au moyen d'un couche de glace située entre piston (10) et chemise (1), produite par le fait que le piston (10) ou la chemise (1) ou les deux sont susceptibles d'être refroidis, caractérisée en ce que le diamètre intérieur de la chemise (1) est variable, grâce à un fluide sous pression agissant dans ou autour de la chemise, ou que le diamètre extérieur du piston (10) est variable, grâce à un fluide sous pression agissant à l'intérieur du piston (10), et que le piston (10) peut tourner dans la chemise (1) en vue de réduire les efforts de friction de translation.

2. Pompe à piston à très haute pression selon la revendication 1, caractérisée en ce que le diamètre intérieur de la chemise (1) est variable, grâce au fluide sous pression, la chemise (1) étant entourée de deux chemises (2, 17) extérieures, insérées l'une dans l'autre, un espace intermédiaire (14), existant entre ces chemises (2, 17) dans la zone d'étanchéité (3) de la chemise (1), qui est rempli de fluide sous pression, l'espace intermédiaire (14) étant relié par des perçages (6, 7, 8) à l'espace de compression (4), l'un des perçages (6, 7, 8) contenant un fluide de barrage (5) produisant une étanchéité, qui empêche la pénétration du fluide pompé (20) dans l'espace intermédiaire (14), et que la variation du diamètre intérieure de la chemise (1) est susceptible d'être commandée, du fait que les perçages (6, 7, 8) passent par un élément de commande (21) qui fait varier la pression du fluide sous pression dans l'espace intermédiaire (14), en fonction de la pression du fluide pompé (20) dans l'espace de compression (4) et d'autres paramètres.

3. Pompe à piston à très haute pression selon la revendication 1, caractérisée en ce que le diamètre extérieur du piston (10) est variable, par le fait qu'existe à l'intérieur (22) de celui-ci un espace creux (23) qui est rempli de fluide sous pression et que l'espace creux (23) est relié par un perçage (24) à l'espace de compression (4), le perçage (24) contenant un élément de barrage (25) assurant une étanchéité, qui empêche la pénétration du fluide pompé (20) dans l'espace creux (23), et que la variation du diamètre extérieur du piston (10) peut être commandé, par le fait que le perçage (24) passe par un élément de commande (16) qui fait varier la pression du fluide sous pression dans l'espace creux (23), en fonction de la pression du fluide pompé (20) dans l'espace de compression (4) et d'autres paramètres.

4. Pompe à piston à très haute pression selon la revendication 1, caractérisée en ce que la rotation du piston (10) s'effectue au moyen d'un moteur électrique susceptible d'être commandé par un microprocesseur, le paramètre principal de la commande étant le gradient de la force de friction de translation du piston (10), déterminée par mesurage.

5. Pompe à piston à très haute pression selon la revendication 1, caractérisée en ce que l'étanchéité est conçue en plusieurs étages, par le fait qu'un ou plusieurs évidements (9), symétriques en rotation et remplis de milieux compressibles, sont placés, suivant un espacement déterminé, dans la paroi intérieure de la chemise (1) susceptible d'être refroidie, ou dans la paroi extérieure du piston (10) susceptible d'être refroidi.

6. Pompe à piston à très haute pression selon la revendication 1, caractérisée en ce que la zone de bordure de la paroi extérieure du piston (10) ou la zone de bordure de la paroi intérieure de la chemise (1) se compose par parties de matériaux de conductibilités thermique différentes.

7. Pompe à piston à très haute pression selon la revendication 1, caractérisée en ce que le piston (10) qui ne contribue pas au refroidissement principal ou la chemise (1) qui ne contribue pas au refroidissement principal est susceptible d'être refroidi(e) et chauffé(e), indépendamment du refroidissement permanent du piston (10) en appui, respectivement de la chemise (1) en appui.

8. Pompe à piston à très haute pression selon la revendication 1, caractérisée en ce que, dans la zone de l'espace de compression (4), la chemise (1) est pourvue de gorges (12) ou d'autres dispositifs isolants thermiquement, afin d'empêcher le gel du fluide pompé dans l'espace de compression (4).

9. Pompe à piston à très haute pression selon les revendications 2 et 3, caractérisée en ce que l'élément de barrage se compose d'un tampon, d'une membrane ou d'un siphon, qui est rempli d'un liquide qui est de densité supérieure au fluide pompé et au fluide sous pression.

10. Pompe à piston à très haute pression selon la revendication 1, caractérisée en ce que le refroidissement du piston (10) ou de la chemise (1), le chauffage et le refroidissement du piston (10) qui ne contribue pas au refroidissement principal ou de la chemise (1) qui ne contribue pas au refroidissement principal, la rotation du piston (10) et la variation de la pression du fluide sous pression en fonction des paramètres de fonctionnement et de la puissance de pompage sont susceptibles d'être commandés par un microprocesseur.

# FIG. 1